# EUROPEAN PATENT SPECIFICATION

(11) **EP 2 650 617 B1**
(45) Date of publication and mention of the grant of the patent: **15.08.2018**
(21) Application number: 10860541.1
(22) Date of filing: 08.12.2010
(51) Int. Cl.: F24F 7/08, F24F 11/00, F24F 12/00

(54) **VENTILATION AND AIR-CONDITIONING DEVICE**
LÜFTUNGS- UND KLIMAANLAGENVORRICHTUNG
DISPOSITIF DE VENTILATION ET DE CLIMATISATION

(43) Date of publication of application: 16.10.2013
(73) Proprietor: Mitsubishi Electric Corporation, Tokyo 100-8310 (JP)
(72) Inventor: YASUDA, Masami, Tokyo 100-8310 (JP); ARAI, Hidemoto, Tokyo 100-8310 (JP); HASEGAWA, Masahiro, Tokyo 102-0073 (JP)
(74) Representative: Pfenning, Meinig & Partner mbB
(86) International application number: PCT/JP2010/072038
(87) International publication number: WO 2012/077201

(56) References cited:
- JP-A- 2000 097 478
- JP-A- 2002 317 990
- JP-A- 2002 317 990
- JP-A- 2003 166 731
- JP-A- 2004 069 222
- JP-A- 2006 105 423
- JP-A- 2008 309 381
- JP-A- 2009 287 861
- JP-A- 2009 287 861

## Description

### Field

The present invention relates to a ventilation and air-conditioning device that performs ventilation while making an indoor humidity adjustment and controlling the temperature of air that is discharged from a product.

### Background

Conventionally, there is a humidity-controlling ventilation device that controls switching of an operation mode (an operation in which heating and humidification are combined, an operation of only humidification, and a dehumidifying operation) based on a temperature measured by an outside-air temperature sensor (see, for example, Patent Literature 1).

There is also a device that determines an operation mode based on the temperature and humidity of outside air, and that satisfies a target indoor temperature and a target humidity, in a mode of high demand for humidification, by using supply air that does not pass through a heat exchange element and exhaust air that is discharged through a heat-pump air conditioner, a sprinkler, and an exhaust grille (see, for example, Patent Literature 2).

Document JP 2002 317990 A discloses a humidity control and ventilation device which prevents condensation in an air supply path or the like and attains energy saving during a condensation preventing operation.The device is provided with a dehumidification unit for dehumidifying outdoor air, and a sensible-heat heat exchanger for exchanging heat between indoor air and the outdoor air which has passed through the dehumidification unit. Switching is conducted between a dehumidification-ventilation operation mode, and a ventilation operation mode wherein the dehumidification unit is stopped. In a ventilation operation mode under a certain condition, the dehumidification unit is operated.

### Citation List

### Patent Literatures

Patent Literature 1: Japanese Patent Application Laid-open No. 2000-97478

Patent Literature 2: International Publication No. WO2009/011362

### Summary

### Technical Problem

However, according to the conventional technique described in Patent Literature 1, the capability value of an air-conditioning coil cannot be changed even when the outside-air humidity rises, because a humidifying operation is performed based only on a measurement result of the outside-air temperature. Therefore, there is a problem such that indoor humidification is performed more than necessary at the time of a heating and humidifying operation, resulting in excessive humidification in a room. Furthermore, there is a problem such that when a heating and humidifying operation is performed in a state where both the temperature and humidity of outside air are high, the temperature of supply air discharged to the inside of the room also rises, and thus the indoor temperature also rises, and an air conditioner that is operated together with the humidity-controlling ventilation device in an indoor space performs an unnecessary cooling operation although the humidity-controlling ventilation device is performing a heating operation.

Furthermore, according to the conventional technique described in Patent Literature 2, heat is not recovered from heated and humidified indoor air and is directly discharged from an exhaust grille, and thus this configuration results in generation of an energy loss. Further, at the time of a low outside-air temperature, only a condenser heats raw outside air to a temperature at which the amount of humidification can be sufficiently secured, and thus this configuration results in generation of an energy load. In addition, a heat exchange element that is mounted in a skeleton is not used at the time of a heating and humidifying operation, and this configuration has a problem such that a high energy load is imposed in operations in winter.

The present invention has been made in view of the above problems, and an object of the present invention is to obtain a ventilation and air-conditioning device that can recover heat from exhaust air to supply air, and that can adjust an amount of heating and an amount of humidification with respect to supply air to the inside of a room according to the temperature and humidity of supplied outside air.

### Solution to Problem

To solve the above described problems and achieve the object, a ventilation and air-conditioning device according to the present invention includes the features of claim 1.

### Advantageous Effects of Invention

The ventilation and air-conditioning device according to the present invention controls the amount of heating of an air-conditioning coil according to the temperature and humidity of outside air, prevents lack of humidification and excessive humidification by adjusting the amount of humidification with respect to supply air to the inside of a room, and also performs heat recovery from exhaust air to the supply air, thereby being capable of performing comfortable ventilation in an energy saving mode.

### Brief Description of Drawings

FIG. 1 is a top perspective view of a configuration of a ventilation and air-conditioning device according to a first embodiment of the present invention.
FIG. 2 is a side cross-sectional view of the ventilation and air-conditioning device according to the first embodiment of the present invention.
FIG. 3 is an example of a map in which capability values of an air-conditioning coil of the ventilation and air-conditioning device controlled according to measurement values of an outside-air temperature sensor and an outside-air humidity sensor are divided by zones based on an outside-air temperature and an outside-air humidity.
FIG. 4 is a flowchart of a control flow of the air-conditioning coil at the time of operating in a heating mode.
FIG. 5 is a top perspective view of a configuration of a ventilation and air-conditioning device according to a second embodiment of the present invention.
FIG. 6 is a flowchart of a control flow of forcible stoppage and cancellation of the air-conditioning coil and a humidifier.

### Description of Embodiments

Exemplary embodiments of a ventilation and air-conditioning device according to the present invention will be explained below in detail with reference to the accompanying drawings. The present invention is not limited to the embodiments.

### First embodiment.

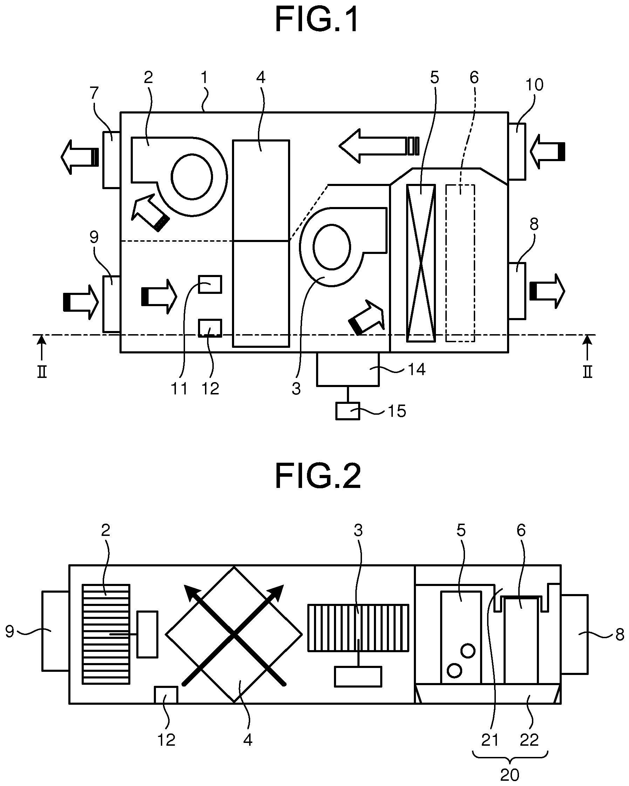

FIGS. 1 and 2 depict configurations of a ventilation and air-conditioning device according to a first embodiment of the present invention. FIG. 1 is a top perspective view, and FIG. 2 is a cross-sectional view taken along a line II-II in FIG. 1. The ventilation and air-conditioning device includes a main unit casing 1, an exhaust air blower 2, a supply air blower 3, a total heat exchanger 4, an air-conditioning coil 5, a humidifier 6, an exhaust-air discharge port 7, a supply-air discharge port 8, a supply-air suction port 9, an exhaust-air suction port 10, an outside-air temperature sensor 11, an outside-air humidity sensor 12, a control unit 14, and a remote controller 15.

The ventilation and air-conditioning device has a box-shaped structure in which a pair of a discharge port and a suction port is provided respectively at an indoor side and at an outdoor side (the supply-air discharge port 8 and the exhaust-air suction port 10, and the exhaust-air discharge port 7 and the supply-air suction port 9), a supply air duct for communicating the supply-air suction port 9 at the outdoor side and the supply-air discharge port 8 at the indoor side, and an exhaust air duct for communicating the exhaust-air suction port 10 at the indoor side and the exhaust-air discharge port 7 at the outdoor side are formed, respectively. The ventilation and air-conditioning device is covered by the main unit casing 1.

The supply air blower 3 is incorporated in the supply air duct and forms a supply air flow. The exhaust air blower 2 is incorporated in the exhaust air duct and forms an exhaust air flow. The total heat exchanger 4 is disposed between the supply air duct and the exhaust air duct, continuously performs total heat exchange between the supply air flow (outdoor air) and the exhaust air flow (indoor air), and designates the outdoor air as the supply air and designates the indoor air as the exhaust air. The humidifier 6 is provided in front of the supply-air discharge port 8 in the supply air duct, and the air-conditioning coil 5 for securing an amount of humidification by heating the supply air is provided between the supply air blower 3 and the humidifier 6.

A humidification air-duct part 20 arranged between the air-conditioning coil 5 and the humidifier 6 is constituted by a humidification air-duct upper part 21 and a humidification air-duct lower part 22 that are arranged while being divided in a vertical direction of the supply air blower 3 within the box-shaped structure. The humidification air-duct upper part 21 is formed in a shape of covering the air-conditioning coil 5 and the humidifier 6 with a foamed resin. The humidification air-duct lower part 22 includes a drain plate made of a foamed resin and is formed as a structure that prevents water immersion into the foamed resin, while simultaneously molding a plastic material on a water reception surface of the drain plate. The humidification air-duct upper part 21 and the humidification air-duct lower part 22 are in a fitting structure in a vertical direction, and integrally form the humidification air-duct part 20.

A primary-side duct through which exhaust air flow passes and a secondary-side duct through which supply air flow passes cross vertically within the total heat exchanger 4. With this configuration, total heat is exchanged between the supply air flow and the exhaust air flow, and heat exchange ventilation can be performed.

The ventilation and air-conditioning device includes the control unit 14 that controls a ventilating operation, and the remote controller 15 that receives a switching operation in an operation mode and the like. The control unit 14 includes a device (an NVRAM and the like) that stores therein a map (described later) in a nonvolatile manner, in addition to a CPU, a RAM, and the like.

The outside-air temperature sensor 11 and the outside-air humidity sensor 12 that respectively measures the temperature and humidity of outside air are provided between the supply-air suction port 9 at the outdoor side and the total heat exchanger 4. The control unit 14 determines the heating capability of the air-conditioning coil 5 based on a measurement result (temperature information and humidity information) of the outside-air temperature sensor 11 and the outside-air humidity sensor 12. Air having passed through the total heat exchanger 4 is heated by the air-conditioning coil 5. The air heated by the air-conditioning coil 5 passes through the humidifier 6, and is supplied to the inside of a room from the supply-air discharge port 8 as humidified air. At this time, the amount of humidification and discharged-air temperature are adjusted based on the amount of heating of the air-conditioning coil 5.

The supply air discharged from the ventilation and air-conditioning device to the inside of the room is mixed with indoor air, and is then sucked into the air conditioner that is installed separately. The air conditioner then adjusts the temperature in the room. That is, the ventilation and air-conditioning device and the indoor air conditioner share functions such that the ventilation and air-conditioning device mainly performs ventilation and humidification and the air conditioner mainly performs a temperature adjustment. Therefore, the ventilation and air-conditioning device needs to adjust the amount of humidification of the supply air such that a relative humidity contains a moisture amount of a standard value (40%, for example) when a predetermined temperature of a room temperature of the air conditioner is a standard value t_{standrad} (22°C, for example).

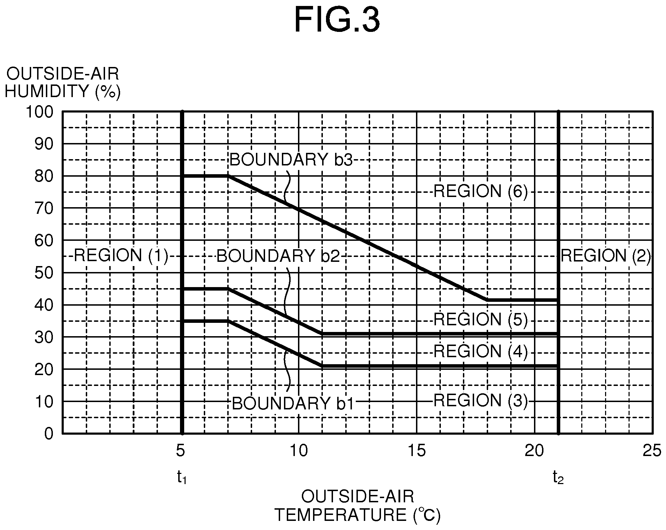

FIG. 3 is an example of a map in which capability values of the air-conditioning coil 5 of the ventilation and air-conditioning device controlled according to measurement values of the outside-air temperature sensor 11 and the outside-air humidity sensor 12 are divided by zones based on an outside-air temperature and an outside-air humidity. This map is formed to perform humidification by controlling the capability of the air-conditioning coil 5 such that the moisture amount contained in the supply air to the inside of the room becomes a standard value (an absolute humidity 0.0066 kg/kg (DA) corresponding to a relative humidity 40% at 22°C, for example), and also to control the capability of the air-conditioning coil 5 such that the temperature of the supply air does not exceed 30°C while prioritizing a temperature adjustment over humidification when the temperature of the supply air becomes equal to or higher than 30°C.

To explain more specifically, the map illustrated in FIG. 3 is created as follows. The temperature and humidity of outdoor air after total heat exchange by the total heat exchanger 4 are calculated for each of an outside-air temperature and an outside-air humidity, by using total heat exchange efficiency of the total heat exchanger 4 measured and obtained in advance based on standard values of an indoor temperature and an indoor humidity (22°C and 40%, for example) set in advance. The temperature and humidity of the outdoor air after the total heat exchange are compared with the standard values of the indoor temperature and the indoor humidity (an absolute humidity 0.0066 kg/kg (DA) at 22°C and 40%, for example). Subsequently, the capability values of the air-conditioning coil 5 are obtained and plotted such that the absolute value of the supply air supplied to the inside of the room from the supply-air discharge port 8 approximates the standard value (0.0066 kg/kg (DA)).

Based on an upper limit tₘₐₓ of a supply air temperature and the standard value t_{standrad} of the indoor temperature, t1 and t2 are set. When the upper limit tₘₐₓ of the supply air temperature is 30°C and when the standard value of the indoor temperature is 22°C, it is most preferred that the t1 is about 5°C at which a discharged-air temperature does not exceed the tₘₐₓ even when the outside-air humidity is high; and that the t2 is about 21°C at which the discharged-air temperature approximates the standard value t_{standard} (22°C, for example) of the indoor temperature by a temperature exchange performed by the total heat exchanger 4, even in a state where the air-conditioning coil 5 is not operating.

In FIG. 3, a boundary b1 is an aggregate of plots at which an absolute humidity of supply air becomes the standard value when the capability value of the air-conditioning coil 5 is 50%. A boundary b2 is an aggregate of plots at which an absolute humidity of the supply air becomes the standard value when the capability value of the air-conditioning coil 5 is 25%. A boundary b3 is an aggregate of plots at which an absolute humidity of the supply air becomes the standard value when the capability value of the air-conditioning coil 5 is 0%. At this time, because the inside of the room is not completely sealed, a required amount of humidification is set by taking a safety factor (1.2 times, for example) into consideration such that the humidity does not become equal to or lower than a standard humidity while taking leakage of indoor air into consideration. Furthermore, when the capability of the air-conditioning coil 5 is controlled to obtain the amount of humidification, the temperature of air supplied to the inside of the room sometimes rises too high, depending on the condition of the temperature and humidity of outside air. Therefore, the upper limit tₘₐₓ (30°C, for example) is set to the supply air temperature, and the temperature is prioritized over the humidity when the supply air temperature exceeds the upper limit tₘₐₓ.

As specific zones of the map, temperature ranges are divided into a temperature range in which the capability of the air-conditioning coil 5 is changed in a stepwise manner according to an outside-air humidity, a temperature range in which prevention of a decline in the discharged-air temperature is prioritized over an excessive amount of humidification because an outside-air temperature t is low; and a temperature range in which prevention of an excessive rise in a supplied temperature is prioritized over an amount of humidification because the outside-air temperature t is high. Furthermore, the temperature range in which the capability of the air-conditioning coil 5 is changed in a stepwise manner according to the outside-air humidity is divided into four regions depending on the capability values of the air-conditioning coil 5. That is, combinations of a certain outside-air temperature and outside-air humidity are divided to be included in any one of zones of a region (1) to a region (6).

The region (1) is a temperature range in which prevention of a decline in the discharged-air temperature is prioritized over an excessive amount of humidification because the outside-air temperature t is low, and this is a region of t<t1. The region (2) is a temperature range in which prevention of an excessive rise in a supplied temperature is prioritized over an amount of humidification because the outside-air temperature t is high, and this is a region of t2≤t. The region (3) to the region (6) are temperature ranges in which the capability of the air-conditioning coil 5 is changed in a stepwise manner according to the outside-air humidity. The region (3) is a region where t1≤t<t2 and is at a lower humidity side than the boundary b1. The region (4) is a region where t1≤t<t2 and is surrounded by the boundary b1 and the boundary b2. The region (5) is a region where t1≤t<t2 and is surrounded by the boundary b2 and the boundary b3. The region (6) is a region where t1≤t<t2 and is at a higher humidity side than the boundary b3.

The region (1) assumes a winter season when outside-air temperature is low. Therefore, to prevent a decline in comfort due to a decline in the discharged-air temperature after humidification, and also because a required amount of humidification to the inside of the room needs to be secured because of a small absolute moisture amount that is contained in the outside air, humidification by a 100% operation is performed without saving the capability of the air-conditioning coil 5 regardless of the value of a relative humidity.

The region (2) assumes an intermediate season when the outside-air temperature is high and the absolute moisture amount that is contained in the outside air is large. Therefore, to prevent an excessive rise in the discharged-air temperature by heating of the air-conditioning coil 5, humidification is performed by setting a thermostat of the air-conditioning coil 5 OFF regardless of the value of a relative humidity. Humidification can be performed by setting the capability value as 0% by keeping the thermostat of the air-conditioning coil 5 ON.

In the region (3), the moisture amount contained in the outside air is small, and therefore a humidifying operation is performed after heating air by a 100% operation of the capability of the air-conditioning coil 5.

Along with a rise of the temperature and humidity of the outside air, the moisture amount contained in the outside air becomes large. Therefore, an operation that satisfies the required amount of humidification becomes possible even when the operation capability of the air-conditioning coil 5 is not high. The region (4) is a region of an outside-air temperature and an outside-air humidity in which the discharged-air temperature does not exceed the upper limit tₘₐₓ and the required amount of humidification can be satisfied even when the capability of the air-conditioning coil 5 is 50%. Therefore, humidification is performed by setting the capability of the air-conditioning coil 5 to 50%. Similarly, the region (5) is a region of an outside-air temperature and an outside-air humidity in which the discharged-air temperature does not exceed the upper limit tₘₐₓ and the required amount of humidification can be satisfied even when the capability of the air-conditioning coil 5 is 25%. Therefore, humidification is performed by setting the capability of the air-conditioning coil 5 to 25%. The region (6) is a region in which the outside-air humidity is high, and the required amount of humidification can be satisfied even when the air-conditioning coil 5 is not operated. Therefore, humidification is performed by setting the capability of the air-conditioning coil 5 to 0%.

The control unit 14 stores the map mentioned above in a nonvolatile memory unit and controls the air-conditioning coil 5 based on this map at the time of operating in a heating mode.

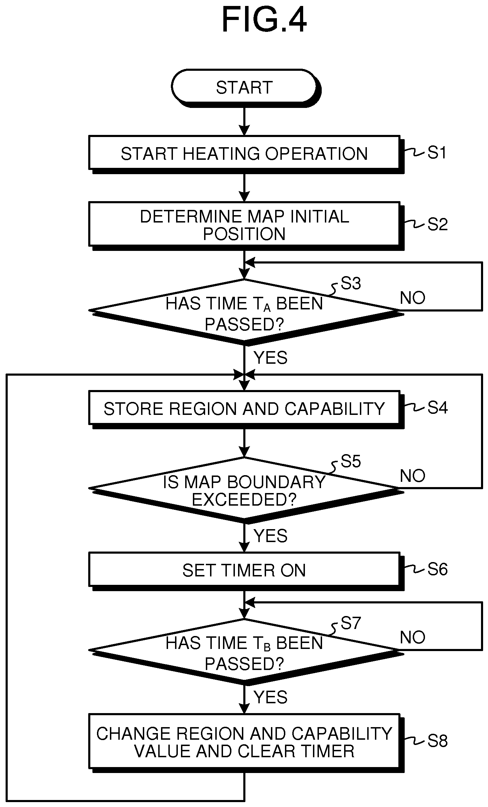

FIG. 4 is a flowchart of a control flow of the air-conditioning coil 5 at the time of operating in a heating mode. When the heating mode is selected as an operation mode by an operation via the remote controller 15, the control unit 14 starts an operation of the ventilation and air-conditioning device in the heating mode at Step S1. At Step S2, the control unit 14 performs an initial determination of a region, and operates the air-conditioning coil 5 at a capability value (50% in the case of the region (4), for example) corresponding to a region of an outside-air temperature and an outside-air humidity at the time of performing Step S1. Meanwhile, when the region corresponds to the region (2), the thermostat of the air-conditioning coil 5 is set OFF. In this case, because behavior instability in rising at the time of an initial operation is ignored, the capability value is not changed or setting ON/OFF of the thermostat of the air-conditioning coil 5 is not performed even when a region in which the outside-air temperature and the outside-air humidity exist, at Step S3, until when a time T_{A} (30 minutes, for example) passes since a control is executed at Step S2 (NO at Step S3). After the time T_{A} has passed (YES at Step S3), the state shifts from the initial state to a steady state.

After the state has shifted to the steady state, a region at a time point when the time T_{A} has passed is stored in the control unit 14 at Step S4. When the region corresponds to any region other than the region (2), a corresponding capability value is also stored in the control unit 14, and a control is executed by this capability value. At Step S5, the control unit 14 determines whether a region has changed from the current region to another region (whether the region has transcended a map boundary) due to a change in the outside-air temperature and outside-air humidity. When the change is detected, the process proceeds to Step S6, and when there is no change in the region, the control unit 14 holds the current region and the capability value. At Step S6, the control unit 14 activates a timer that measures a time T_{B} (30 minutes, for example), and advances the process to Step S7. Immediately after the region changes, the outside-air temperature and outside-air humidity exist in a vicinity of the boundary between regions, and therefore, in order to prevent chattering between the regions, during the time when the timer is activated, the control unit 14 operates the air-conditioning coil 5 by the capability value before the activation of the timer stored at Step S4. Next, at Step S7, the control unit 14 determines a passage of time, and when the time T_{B} has passed (YES at Step S7), the process proceeds to Step S8. When the time T_{B} has not passed (NO at Step S7), the process returns to Step S7. At Step S8, the control unit 14 changes the capability value to a capability value corresponding to a region immediately after completion of the timer. The control unit 14 then clears the timer, and thereafter the process returns to the control at Step S4 where a region and a capability value corresponding thereto are stored.

By executing the control described above, the capability of the air-conditioning coil can be controlled according to the outside-air temperature and outside-air humidity, and the moisture amount in the supply air to the inside of a room can be set approximately constant by adjusting the amount of humidification. Therefore, the moisture amount in the supply air can be set to a target relative humidity when the indoor air reaches a predetermined temperature by an air conditioner or the like installed separately. Accordingly, lack of humidification and excessive humidification can be prevented.

By providing an upper limit temperature of the supply air to the inside of the room, and by setting the temperature to equal to or lower than the upper limit temperature, it is possible to prevent a state where, for example, an air conditioner separately installed in the room performs an unnecessary cooling operation in winter.

As described above, according to the present embodiment, the capability value of the air-conditioning coil is determined based on an outside-air temperature and an outside-air humidity, and humidification is performed while saving the heating capability. With this configuration, while securing an amount of humidification supplied to the inside of the room, an operation is continued in such a way that the temperature of the supply air discharged to the inside of the room does not exceed a predetermined value, and the air conditioner operated in the room together with the ventilation and air-conditioning device can prevent a cooling operation even though it is winter. Consequently, energy saving can be achieved.

The air-conditioning coil and the humidifier are operated while the total heat exchanger performs total heat exchange between air sucked into the room from outside the room and air discharged from the inside of the room to outside of the room. Therefore, heat and moisture supplied by the ventilation and air-conditioning device can be kept in the room without letting them leak out of the room, and the load of the air-conditioning coil and the humidifier can be reduced.

### Second embodiment.

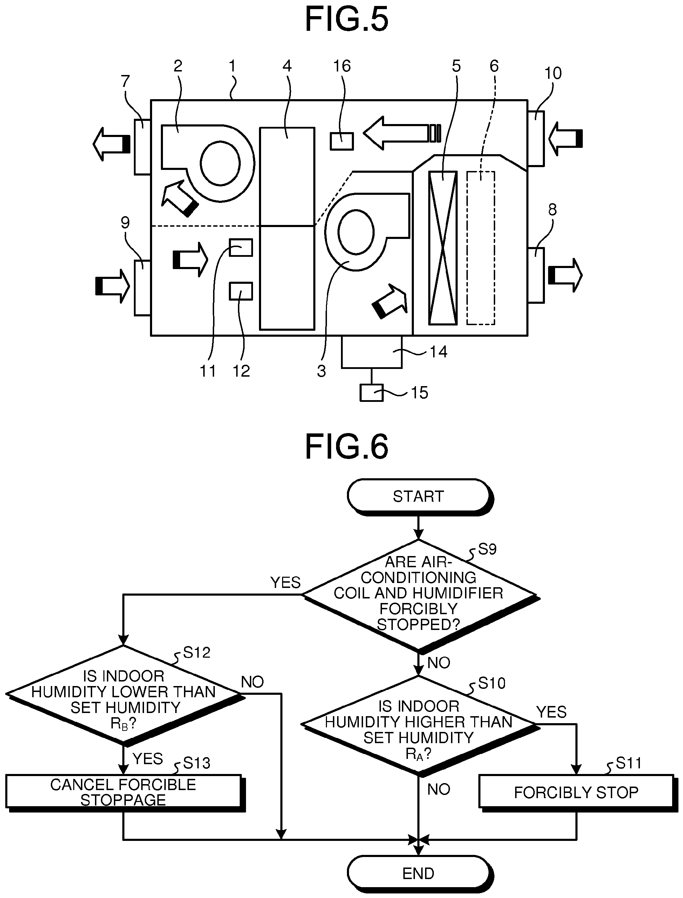

FIG. 5 is a top perspective view of a configuration of a ventilation and air-conditioning device according to a second embodiment of the present invention. The present embodiment is different from the first embodiment in that the ventilation and air-conditioning device includes an indoor humidity sensor 16 that measures an indoor humidity between the exhaust-air suction port 10 from an indoor side and the total heat exchanger 4.

The ventilation and air-conditioning device according to the present embodiment performs forcible stoppage and cancellation of the air-conditioning coil 5 and the humidifier 6 based on an indoor humidity measured by the indoor humidity sensor 16, in addition to operations identical to those of the first embodiment.

FIG. 6 is a flowchart of a control flow of forcible stoppage and cancellation of the air-conditioning coil 5 and the humidifier 6. When an operation of the ventilation and air-conditioning device is started in a heating mode, the ventilation and air-conditioning device executes a control in FIG. 6 in parallel with processes at Steps S2 to S8 in the flowchart illustrated in FIG. 4. For example, the control in FIG. 6 is executed between respective steps at Steps S2 and S8 in FIG. 4.

At Step S9, the control unit 14 determines whether the air-conditioning coil 5 and the humidifier 6 are forcibly stopped, and when they are not forcibly stopped (NO at Step S9), the process proceeds to Step S10. When the air-conditioning coil 5 and the humidifier 6 are forcibly stopped (YES at Step S9), the process proceeds to Step S12. At Step S10, the control unit 14 compares an indoor humidity R measured by the indoor humidity sensor 16 with a set humidity R_{A} (a first threshold, such as 45%) set in advance. When the indoor humidity R is higher than the set humidity R_{A} (YES at Step S10), the process proceeds to Step S11. When the indoor humidity R is equal to or lower than the set humidity R_{A} (NO at Step S10), the process is finished. At Step S11, the control unit 14 determines that the supply of humidification to the inside of a room is sufficient, and forcibly stops the operation of the humidifier 6. At this time, the control unit 14 also forcibly stops the operation of the air-conditioning coil 5, and sets a thermostat OFF. At Step S12, the control unit 14 compares the indoor humidity R measured by the indoor humidity sensor 16 with a set humidity R_{B} (a second threshold, such as 35%) set in advance. When the indoor humidity R is lower than the set humidity R_{B} (YES at Step S12), the process proceeds to Step S13, and when the indoor humidity R is equal to or higher than the set humidity R_{B} (NO at Step S12), the process is finished. At Step S13, because there is a state where the room temperature is low and heating is required, the forcible stoppage of the air-conditioning coil 5 and the humidifier 6 is cancelled. The humidifier 6 is then operated, and the air-conditioning coil 5 is also simultaneously operated in order to perform humidification and to secure an amount of humidification.

The control unit 14 executes the control in FIG. 6 with a priority over the control in FIG. 4. For example, even when a measurement result of the outside-air temperature sensor 11 and the outside-air humidity sensor 12 corresponds to any one of the regions (1), and (3) to (5) on the map, when the indoor humidity R measured by the indoor humidity sensor 16 exceeds the set humidity R_{A}, an operation is performed by setting the air-conditioning coil 5 OFF. On the other hand, when the indoor humidity R measured by the indoor humidity sensor 16 is lower than the set humidity R_{B}, based on a region on the map according to a measurement result of the outside-air temperature sensor 11 and the outside-air humidity sensor 12, an operation is performed by setting the thermostat of the air-conditioning coil 5 ON.

By executing the control described above, effects identical to those in the first embodiment can be achieved. At the same time, for example, when indoor air is excessively humidified because of humidification due to separate installation of a humidifier in a room, humidification to the supply air by the ventilation and air-conditioning device can be stopped, and indoor humidification can be properly controlled. When the air-conditioning coil is also stopped at a stoppage time of the humidifier, unnecessary heating of the supply air can be suppressed, and an excessive rise in the indoor temperature can be prevented. Furthermore, due to incorporating of the total heat exchanger in the ventilation and air-conditioning device, air is discharged to outside of the room by performing heat exchange between the outside air and the indoor air even at a stoppage time of the humidifier and the air-conditioning coil. Therefore, ventilation can be performed without generating any uncomfortable feeling caused by cool wind due to raw outside air.

By calculating a temperature t₃ having passed the total heat exchanger 4 based on an outside-air temperature and an indoor temperature; in a condition in which the indoor humidity reaches the set humidity R_{A} and the air-conditioning coil 5 and the humidifier 6 are stopped, when the temperature of supply air discharged to the inside of the room after heat exchange (that is, the temperature of outdoor air that has passed the total heat exchanger 4) is low (t₃=10°C, for example), a decline in the temperature of the supply air discharged to the inside of the room may be prevented by reducing the capability to a predetermined level (25%, for example), instead of forcibly stopping the air-conditioning coil 5.

Here, while the indoor humidity sensor 16 is installed between the exhaust-air suction port 10 from the indoor side and the total heat exchanger 4, the indoor humidity sensor 16 may be installed in an indoor space that is actually used.

Furthermore, in a case of directly sucking the supply air discharged from the ventilation and air-conditioning device into an air conditioner that is separately installed in a room, when the supply air temperature is high in a heating period in winter, there is a risk that the air humidified by the ventilation and air-conditioning device is dehumidified because a thermostat of an indoor air conditioner is set OFF or because the operation is automatically switched to a cooling operation. However, by stopping the air-conditioning coil 5, the supply air temperature is kept low, and thus the air conditioner can stably continue a heating operation.

### Industrial Applicability

As described above, the ventilation and air-conditioning device according to the present invention is useful in a feature that a humidifying operation can be performed in an energy saving mode while actively saving the capability of an air-conditioning coil when heating by the air-conditioning coil is unnecessary, and the ventilation and air-conditioning device is particularly suitable to constitute an air-conditioning system by separately installing an air conditioner and a humidifier in a room.

### Reference Signs List

1 main unit casing
2 exhaust air blower
3 supply air blower
4 total heat exchanger
5 air-conditioning coil
6 humidifier
7 exhaust-air discharge port
8 supply-air discharge port
9 supply-air suction port
10 exhaust-air suction port
11 outside-air temperature sensor
12 outside-air humidity sensor
14 control unit
15 remote controller
16 indoor humidity sensor

## Claims

1. A ventilation and air-conditioning device comprising:
a casing (1) that includes a supply air duct for sucking in outdoor air and supplying the outdoor air to inside of a room as supply air and an exhaust air duct for sucking in indoor air and discharging the indoor air to outside of a room;
a total heat exchanger (4) that is positioned between the supply air duct and the exhaust air duct and is accommodated in the casing (1), and that performs total heat exchange between the outdoor air sucked into the supply air duct and the indoor air sucked into the exhaust air duct;
a temperature sensor (11) that measures a temperature of the outdoor air;
a humidity sensor (12) that measures a humidity of the outdoor air;
an air-conditioning coil (5) that heats the supply air; and
a control unit (14) that controls the air-conditioning coil (5) such that an absolute humidity of the supply air becomes a predetermined value based on a measurement result of the temperature sensor (11) and the humidity sensor (12);
**characterized in that**
the ventilation and air-conditioning device further comprises
a unit that stores therein reference data in which a combination of the temperature and the humidity of the outdoor air is related to a capability value of the air-conditioning coil (5), wherein
the control unit (14) acquires a capability value of the air-conditioning coil (5) corresponding to a measurement result of the temperature sensor (11) and the humidity sensor (12) based on the reference data, and drives the air-conditioning coil (5) by a capability corresponding to an acquired capability value.

2. The ventilation and air-conditioning device according to claim 1, wherein
in the reference data,
when the temperature of the outdoor air is lower than a first temperature, 100% is related as the capability value regardless of the humidity of the outdoor air,
when the temperature of the outdoor air is equal to or higher than a second temperature that is higher than the first temperature, 0% is related as the capability value regardless of the humidity of the outdoor air, and
when the temperature of the outdoor air is equal to or higher than the first temperature and lower than the second temperature, any one of a plurality of capability values set in advance in a stepwise manner between 0% and 100% is related to correspond to a capability value of which value is lower when the humidity of the outdoor air is higher.

3. The ventilation and air-conditioning device according to claim 2, comprising an indoor humidity sensor (16) that measures the humidity of the indoor air, wherein
the control unit (14) forcibly stops the air-conditioning coil (5) when a measurement value of the indoor humidity sensor (16) exceeds a first threshold set in advance, and cancels forcible stoppage of the air-conditioning coil (5) when the measurement value of the indoor humidity sensor (16) is lower than a second threshold that is smaller than the first threshold.

4. The ventilation and air-conditioning device according to claim 3, comprising an indoor humidity sensor (16) that measures the humidity of the indoor air, wherein
the control unit (14) reduces a capability value of the air-conditioning coil (5) when a measurement value of the indoor humidity sensor (16) exceeds a first threshold set in advance, and cancels a decline in the capability value of the air-conditioning coil (5) when the measurement value of the indoor humidity sensor (16) is lower than a second threshold that is smaller than the first threshold.

5. The ventilation and air-conditioning device according to claim 3 or 4 comprising a humidifier that humidifies the supply air, wherein
the control unit (14) forcibly stops the humidifier when the measurement value of the indoor humidity sensor (16) exceeds the first threshold, and cancels forcible stoppage of the humidifier when the measurement value of the indoor humidity sensor (16) is lower than the second threshold.

## Patentansprüche

1. Lüftungs- und Klimaanlage, umfassend:
ein Gehäuse (1), das einen Zuluftkanal zum Einsaugen von Außenraumluft und Zuführen der Außenraumluft zur Innenseite eines Raums als Zuluft und einen Abluftkanal zum Einsaugen von Innenraumluft und Abgeben der Innenraumluft zur Außenseite eines Raums umfasst;
einen Gesamtwärmetauscher (4), der zwischen dem Zuluftkanal und dem Abluftkanal positioniert ist und in dem Gehäuse (1) untergebracht ist, und der Gesamtwärmeaustausch zwischen der in den Zuluftkanal eingesaugten Außenluft und der in den Abluftkanal eingesaugten Innenraumluft durchführt;
einen Temperatursensor (11), der eine Temperatur der Außenluft misst;
einen Feuchtesensor (12), der eine Feuchte der Außenluft misst;
eine Klimatisierungsspule (5), die die Zuluft erwärmt; und
eine Steuereinheit (14), die die Klimatisierungsspule (5) steuert, so dass eine absolute Feuchte der Zuluft einen vorherbestimmten Wert annimmt auf der Grundlage eines Messergebnisses des Temperatursensors (11) und des Feuchtesensors (12);
**dadurch gekennzeichnet, dass**
die Lüftungs- und Klimaanlage ferner umfasst:
eine Einheit, in welcher Referenzdaten gespeichert werden, in welchen eine Kombination der Temperatur und der Feuchte der Außenluft einem Kapazitätswert der Klimatisierungsspule (5) zugeordnet ist, wobei die Steuereinheit (14) einen Kapazitätswert der Klimatisierungsspule (5) einem Messergebnis des Temperatursensors (11) und des Feuchtesensors (12) entsprechend erwirbt auf der Grundlage der Referenzdaten, und die Klimatisierungsspule (5) mit einer Kapazität entsprechend einem erworbenen Kapazitätswert betreibt.

2. Lüftungs- und Klimaanlage nach Anspruch 1, wobei in den Referenzdaten,
wenn die Temperatur der Außenluft niedriger ist als eine erste Temperatur, 100% als der Kapazitätswert zugeordnet wird unabhängig von der Feuchte der Außenluft,
wenn die Temperatur der Außenluft gleich ist wie oder höher ist als eine zweite Temperatur, die höher ist als die erste Temperatur, 0% als der Kapazitätswert zugeordnet wird unabhängig von der Feuchte der Außenluft, und
wenn die Temperatur der Außenluft gleich ist wie oder höher ist als die erste Temperatur und niedriger ist als die zweite Temperatur, irgendeiner von einer Vielzahl von abgestuft zwischen 0% und 100% im Voraus eingestellten Kapazitätswerten zugeordnet wird, um einem Kapazitätswert zu entsprechen, dessen Wert niedriger ist, wenn die Feuchte der Außenluft höher ist.

3. Lüftungs- und Klimaanlage nach Anspruch 2, umfassend einen Innenraumfeuchtesensor (16), der die Feuchte der Innenraumluft misst, wobei
die Steuereinheit (14) die Klimatisierungsspule zwangsweise stoppt, wenn ein Messwert des Innenraumfeuchtesensors (16) einen im Voraus eingestellten ersten Schwellenwert überschreitet und zwangsweises Stoppen der Klimatisierungsspule (5) aufhebt, wenn der Messwert des Innenraumfeuchtesensors (16) geringer ist als ein zweiter Schwellenwert, der kleiner ist als der erste Schwellenwert.

4. Lüftungs- und Klimaanlage nach Anspruch 3, umfassend einen Innenraumfeuchtesensor (16), der die Feuchte der Innenraumluft misst, wobei
die Steuereinheit (14) einen Kapazitätswert der Klimatisierungsspule (5) reduziert, wenn ein Messwert des Innenraumfeuchtesensors (16) einen im Voraus eingestellten ersten Schwellenwert überschreitet, und einen Abfall des Kapazitätswerts der Klimatisierungsspule (5) aufhebt, wenn der Messwert des Innenraumfeuchtesensors (16) geringer ist als einer zweiter Schwellenwert, der kleiner ist als der erste Schwellenwert.

5. Lüftungs- und Klimaanlage nach Anspruch 3 oder 4, umfassend einen Luftbefeuchter, der die Zuluft befeuchtet, wobei
die Steuereinheit (14) den Luftbefeuchter zwangsweise stoppt, wenn der Messwert des Innenraumfeuchtesensors (16) den ersten Schwellenwert überschreitet, und zwangsweises Stoppen des Luftbefeuchters aufhebt, wenn der Messwert des Innenraumfeuchtesensors (16) geringer ist als der zweite Schwellenwert.

## Revendications

1. Dispositif de ventilation et de climatisation comprenant :
une enveloppe (1) qui comprend un conduit d'approvisionnement en air destiné à aspirer l'air extérieur, et à fournir l'air extérieur à l'intérieur d'une pièce en tant qu'air d'entrée, et un conduit d'évacuation de l'air destiné à aspirer l'air intérieur, et à évacuer l'air intérieur à l'extérieur de la pièce ;
un échangeur de chaleur totale (4) qui est positionné entre le conduit d'approvisionnement en air et le conduit d'évacuation de l'air, et qui est reçu dans l'enveloppe (1), et qui exécute un échange de chaleur totale entre l'air extérieur aspiré dans le conduit d'approvisionnement en air, et l'air intérieur aspiré dans le conduit d'évacuation de l'air ;
un détecteur de température (11) qui mesure la température de l'air extérieur ;
un détecteur d'humidité (12) qui mesure l'humidité de l'air extérieur ;
un serpentin de climatisation (5) qui chauffe l'air d'entrée ; et
une unité de commande (14) qui commande le serpentin de climatisation (5) de telle sorte que l'humidité absolue de l'air d'entrée devienne une valeur prédéterminée sur la base du résultat de la mesure du détecteur de température (11) et du détecteur d'humidité (12) ;
**caractérisé en ce que** :
le dispositif de ventilation et de climatisation comprend en outre une unité qui stocke à l'intérieur des données de référence dans lesquelles une combinaison de la température et de l'humidité de l'air extérieur, se rapporte à une valeur de capacité du serpentin de climatisation (5) ;
dans lequel l'unité de commande (14) acquiert une valeur de capacité du serpentin de climatisation (5) qui correspond à un résultat de mesure du détecteur de température (11) et du détecteur d'humidité (12) sur la base des données de référence, et commande le serpentin de climatisation (5) selon une capacité qui correspond à une valeur de capacité acquise.

2. Dispositif de ventilation et de climatisation selon la revendication 1, dans lequel :
dans les données de référence :
lorsque la température de l'air extérieur est inférieure à une première température, une valeur de 100 % est associée à la valeur de capacité indépendamment de l'humidité de l'air extérieur ;
lorsque la température de l'air extérieur est égale ou supérieure à une seconde température qui est supérieure à la première température, une valeur de 0 % est associée à la valeur de capacité indépendamment de l'humidité de l'air extérieur ; et
lorsque la température de l'air extérieur est égale ou supérieure à la première température, et inférieure à la seconde température, n'importe laquelle d'une pluralité de valeurs de capacité fixées à l'avance d'une façon par paliers entre 0 % et 100 %, est associée de façon à correspondre à une valeur de capacité dont la valeur est plus faible lorsque l'humidité de l'air extérieur est plus élevée.

3. Dispositif de ventilation et de climatisation selon la revendication 2, comprenant un détecteur d'humidité intérieure (16) qui mesure l'humidité de l'air intérieur, dans lequel :
l'unité de commande (14) arrête de force le serpentin de climatisation (5) quand une valeur de mesure du détecteur d'humidité intérieure (16), dépasse un premier seuil fixé à l'avance, et annule l'arrêt de force du serpentin de climatisation (5) lorsque la valeur de mesure du détecteur d'humidité intérieure (16) est inférieure à un second seuil qui est inférieur au premier seuil.

4. Dispositif de ventilation et de climatisation selon la revendication 3, comprenant un détecteur d'humidité intérieure (16) qui mesure l'humidité de l'air intérieur, dans lequel :
l'unité de commande (14) diminue la valeur de capacité du serpentin de climatisation (5) quand une valeur de mesure du détecteur d'humidité intérieure (16), dépasse un premier seuil fixé à l'avance, et annule la diminution de la valeur de capacité du serpentin de climatisation (5) lorsque la valeur de mesure du détecteur d'humidité intérieure (16) est inférieure à un second seuil qui est inférieur au premier seuil.

5. Dispositif de ventilation et de climatisation selon la revendication 3 ou la revendication 4, comprenant un humidificateur qui humidifie l'air d'entrée, dans lequel :
l'unité de commande (14) arrête de force l'humidificateur lorsque la valeur de mesure du détecteur d'humidité intérieure (16) dépasse le premier seuil, et annule l'arrêt de force de l'humidificateur lorsque la valeur de mesure du détecteur d'humidité intérieure (16) est inférieure au second seuil.
